(19) Europäisches Patentamt
European Patent Office
Office européen des brevets

(11) Veröffentlichungsnummer: **0 062 866**
**B1**

(12) # EUROPÄISCHE PATENTSCHRIFT

(45) Veröffentlichungstag der Patentschrift: **31.10.84**

(51) Int. Cl.³: **C 08 G 63/12**, C 09 D 3/64

(21) Anmeldenummer: **82102856.0**

(22) Anmeldetag: **03.04.82**

(54) **Verfahren zur Herstellung von Polyestern unter Verwendung von Mannit- bzw. Sorbitderivaten, Mischungen aus Polyestern und diesen Mannit- bzw. Sorbitderivaten und ihre Verwendung zur Herstellung wässriger Einbrennlacke.**

(30) Priorität: **14.04.81 DE 3115071**

(43) Veröffentlichungstag der Anmeldung: **20.10.82 Patentblatt 82/42**

(45) Bekanntmachung des Hinweises auf die Patenterteilung: **31.10.84 Patentblatt 84/44**

(84) Benannte Vertragsstaaten: **AT CH DE FR GB IT LI NL SE**

(56) Entgegenhaltungen: **GB - A - 505 016**

(73) Patentinhaber: **BAYER AG, Konzernverwaltung RP Patentabteilung, D-5090 Leverkusen 1 Bayerwerk (DE)**

(72) Erfinder: **Dhein, Rolf, Dr., Deswatinesstrasse 30, D-4150 Krefeld (DE)**
Erfinder: **Bäcker, Lothar, Ing.-grad., Gievenheimer Strasse 26, D-4047 Dormagen 5 (DE)**
Erfinder: **Schoeps, Jochen, Dr., Windmühlenstrasse 126, D-4150 Krefeld (DE)**

**EP 0 062 866 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyestern unter Verwendung von Dianhydromannit, Dianhydrosorbit, Dianhydromannit- und/oder Dianhydrosorbithalbestern, Mischungen aus Polyestern und Dianhydromannit, Dianhydrosorbit, Dianhydromannit- und/oder Dianhydrosorbithalbestern bzw. ihren Salzen und ihre Verwendung zur Herstellung wäßriger Einbrennlacke. Die erfindungsgemäß hergestellten Polyester und die erfindungsgemäßen Mischungen eignen sich hervorragend als Bindemittel für wäßrige Einbrennlacke.

Früher hat man Polyester mit hohen Säurezahlen neutralisiert und auf diese Weise wasserverdünnbar gemacht (GB-PS 356 738), erhielt dann aber Lackierungen mit nicht ausreichender Wetter- und Korrosionsbeständigkeit. Diesen Nachteil vermeiden heute gebräuchliche wasserverdünnbare Polyester mit Säurezahlen von mindestens etwa 40, vorzugsweise etwa 45 bis 65, und Hydroxylzahlen von etwa 150 bis etwa 250; die freien Hydroxylgruppen können durch Umsetzung mit Aminoplastharzen vernetzt werden (AT-PS 180 407). Zur Verbesserung von Löslichkeit und Viskosität werden meist organische Hilfslösungsmittel, wie z. B. wassermischbare Alkohole, Ester und Ketone, mitverwendet. Da die üblichen organischen Hilfslösungsmittel während der Härtung den Lackfilm weitgehend verlassen, ist es ökologisch und ökonomisch sinnvoll, nach Polyestern zu suchen, die ohne organische Hilfslösungsmittel zu qualitativ hochwertigen Lackierungen verarbeitet werden können.

Überraschenderweise wurde nun gefunden, daß man unter Verwendung von Dianhydromannit, Dianhydrosorbit, Dianhydromannit- und/oder Dianhydrosorbithalbestern sehr reaktive wasserverdünnbare Polyester herstellen kann, die auch ohne jegliches organisches Lösungsmittel zu wetter- und korrosionsbeständigen Überzügen verarbeitet werden können. Bemerkenswert ist dabei vor allem die Möglichkeit, wasserunlösliche Polyester mit Säurezahlen um 10 durch Umsetzung mit Dianhydromannit- bzw. Dianhydrosorbithalbestern und anschließende Neutralisation derart wasserverdünnbar zu machen, daß sich die Verwendung organischer Hilfslösungsmittel erübrigt.

Weiterhin wurde gefunden, daß Dianhydromannit, Dianhydrosorbit, Dianhydromannit- und Dianhydrosorbithalbester bzw. ihre Salze hervorragende Reaktivverdünner für Polyester sind. Unter »Reaktivverdünnern« versteht man niedrigviskose Stoffe, die harzartige Bindemittel verdünnen und dadurch dem Lack die zu seiner Applikation notwendige Viskosität verleihen, zur Mischpolymerisation oder Mischkondensation mit dem Lackharz befähigte funktionelle Gruppen enthalten und beim Härtungsvorgang zum überwiegenden Teil — jeweils in Abhängigkeit von ihrer Flüchtigkeit — Bestandteil des gehärteten Lackfilms werden. Dianhydromannit, Dianhydrosorbit, Dianhydromannit- und Dianhydrosorbithalbester werden ohne nennenswerte Verluste in die Überzüge eingebaut. Als Reaktivverdünner in wäßrigen Polyesterlacken eingesetzt, gestatten sie den Verzicht auf andere organische Lösungsmittel — überraschenderweise selbst bei Verwendung wasserunlöslicher Polyester. Ihre ausgezeichnete Wasserlöslichkeit ermöglicht die Herstellung festkörperreicher Lacke. Darüber hinaus zeigen Polyesterüberzüge, die unter Verwendung von Dianhydromannit, Dianhydrosorbit, Dianhydromannit- und/oder Dianhydrosorbithalbestern bzw. ihren Salzen als Reaktivverdünner hergestellt worden sind, eine außergewöhnlich geringe Kreidung.

Gegenstand der Erfindung ist ein Verfahren zur Herstellung von Polyestern mit einem mittleren Molekulargewicht $\overline{M}_n$ von 1000 bis 10 000, einer Säurezahl von 1 bis 100, vorzugsweise 10—70, und einer Hydroxyzahl von 30 bis 400, dadurch gekennzeichnet, daß man 5—50, vorzugsweise 10—30, Gew.-%, bezogen auf Polyesterausgangskomponenten, Dianhydromannit, Dianhydrosorbit, Dianhydromannit- und/oder Dianhydrosorbithalbester einsetzt.

Weiterer Gegenstand der Erfindung sind Mischungen aus

A) 10—90, vorzugsweise 30—60, Gew.-% Polyester mit einem mittleren Molekulargewicht $\overline{M}_n$ von 1000 bis 10 000,
B) 10—50 Gew.-% Reaktivverdünner,
C) bis zu 50 Gew.-% Wasser und
D) 0—40, vorzugsweise 10—30, Gew.-% Aminoplastharz,

wobei sich die Prozentangaben auf die Summe der Komponenten A, B und D beziehen, dadurch gekennzeichnet, daß der Reaktivverdünner B Dianhydromannit, Dianhydrosorbit, Dianhydromannit- und/oder Dianhydrosorbithalbester bzw. ein Salz dieser Verbindungen ist.

Weiterer Gegenstand der Erfindung ist die Verwendung dieser Mischungen zur Herstellung wäßriger Einbrennlacke.

Dianhydromannit und Dinhydrosorbit sind aus Mannit bzw. Sorbit durch Abspaltung von 2 Mol Wasser erhältliche bicyclische Diether:

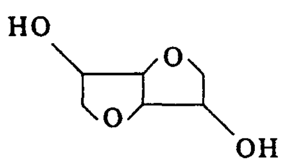

1,4—3,6-Dianhydrosorbit
1,4—3,6-Dianhydromannit

Beide Verbindungen sind Stereoisomere.

Unter »Dianhydromannithalbestern« und »Dianhydrosorbithalbestern« sollen Ester aus Di-, Tri- oder Tetracarbonsäureanhydriden mit 3 bis 12 C-Atomen und Dianhydromannit bzw. Dianhydrosorbit verstanden werden, die mindestens je eine freie Hydroxyl- und Carboxylgruppe enthalten mit der Maßgabe, daß sie nicht gleichzeitig mehr als einen Dianhydromannit- bzw. Dianhydrosorbitrest und mehr als einen Di-, Tri- oder Tetracarbonsäurerest enthalten. Bevorzugte Carbonsäureanhydride für die Herstellung der Dianhydromannit- bzw. Dianhydrosorbithalbester sind Tetra- und Hexahydrophthalsäureanhydrid, Maleinsäureanhydrid, Bernsteinsäureanhydrid, Phthalsäureanhydrid, Trimellith- und Pyromellithsäureanhydrid. Die Halbester können auch aus Anhydrid und Dianhydromannit- bzw. Dianhydrosorbit in Gegenwart des Polyesters A gebildet werden.

Die unter Verwendung von Dianhydromannit, Dianhydrosorbit, Dianhydromannit- und/oder Dianhydrosorbithalbestern herzustellenden Polyester und die Polyester A) sind aus Alkoholen und Carbonsäuren und/oder deren esterbildenden Derivaten hergestellte Polykondensate der Art, wie sie z. B. in Römpp's Chemielexikon, Bd. 1, S. 202, Frankh'sche Verlagsbuchhandlung, Stuttgart, 1966 definiert oder bei D. H. Solomon, The Chemistry of Organic Filmformers, S. 75—101, John Wiley & Sons Inc., New York, 1967, beschreiben sind.

Die Polyester A besitzen in der Regel Hydroxyzahlen von 30 bis 400 und vor der Neutralisation Säurezahlen von 1 bis 100, vorzugsweise von 10 bis 70.

Für das erfindungsgemäße Verfahren und für die Herstellung der Polyester A) bevorzugte Alkohole sind neben Dianhydromannit bzw. Dianhydrosorbit aliphatische, cycloaliphatische und/oder araliphatische Alkohole mit 1—6, vorzugsweise 1—4, an nicht-aromatische C-Atome gebundenen OH-Gruppen und 1—24 C-Atomen pro Molekül, z. B. Glykole wie Ethylenglykol, Propylenglykol, Butandiole, Neopentylglykol, Hexandiole; Etheralkohole wie Di- und Triethylenglykole; oxethylierte Bisphenole; perhydrierte Bisphenole; ferner Trimethylolethan, Trimethylolpropan, Glycerin, Pentaerythrit, Dipentaerythrit, Mannit und Sorbit; einwertige, kettenabbrechende Alkohole wie Propanol, Butanol, Cyclohexanol und Benzylalkohol.

Für das erfindungsgemäße Verfahren und für die Herstellung der Polyester A) bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 4—12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellithsäureanhydrid, Pyromellithsäureanhydrid, Maleinsäureanhydrid, Adipinsäure, Azelainsäure und Bernsteinsäureanhydrid, ferner halogenierte Säure, wie Chlorphthalsäuren und Hexachlorendomethylen-tetrahydrophthalsäure.

Für das erfindungsgemäße Verfahren und für die Herstellung der Polyester A) bevorzugte Monocarbonsäuren sind aliphatische, cycloaliphatische gesättigte und ungesättigte und aromatische Monocarbonsäuren mit 6—24 C-Atomen pro Molekül wie Benzoesäure, Butylbenzoesäure, Tolylsäure, Hexahydrobenzoesäure, Abietinsäure, Milchsäure sowie Fettsäuren und Ester derselben wie Leinöl, Sojaöl, Holzöl, Saffloröl, Ricinusöl, Ricinenöl, Baumwollsaatöl, Erdnußöl, Tallölfettsäure, Leinölfettsäure, Sojaöl-, Holzöl-, Saffloröl- und Ricinenölfettsäure und aus natürlichen, ungesättigten Ölen oder Fettsäuren durch Konjugierung oder Isomerisierung gewonnene Produkte; geeignete gesättigte Fettsäuren sind beispielsweise Cocosfettsäuren und $\alpha$-Ethylhexansäure.

Das mittlere Molekulargewicht der erfindungsgemäß herzustellenden Polyester und der Polyester A) beträgt 1000—10 000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch bestimmt in Aceton).

Besonders bevorzugte Polyester A sind solche, die durch Umsetzung hydroxylgruppenhaltiger Polyester mit Carbonsäureanhydriden erhältlich sind. Für diesen Zweck bevorzugte Carbonsäureanhydride sind die oben für die Herstellung der Dianhydromannit- bzw. Dianhydrosorbithalbester genannten Anhydride. Bevorzugtes Anhydrid ist Tetrahydrophthalsäureanhydrid.

Als Aminoplastharze D) sind beispielsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z. B. in der FR-PS 943 411 oder bei D. H. Solomon, The Chemistry of Organic Filmformers, 235—240, John Wiley & Sons, Inc., New York, 1967, beschrieben sind. Die Melaminharze können jedoch auch ganz oder teilweise durch andere vernetzende Aminoplasten, wie sie z. B. in »Methoden der Organischen Chemie« (Houben-Weyl), Bd. 14/2, Teil 2, 4. Aufl., Georg Thieme Verlag, Stuttgart, 1963, 319 ff., beschrieben sind, ersetzt werden.

Für die Neutralisation der erfindungsgemäß herzustellenden Polyester, der Polyester A, von Dianhydromannit- und Dianhydrosorbithalbestern eignen sich anorganische oder organische Basen. Der Neutralisationsgrad liegt in der Regel zwischen 70 und 100%. Es soll möglichst nicht mehr Base zugegeben werden als ein den freien Carboxylgruppen äquivalenter Anteil. Bevorzugte Basen sind beispielsweise Ammoniak, primäre, sekundäre und tertiäre Amine wie Ethylamin, Diethylamin, Triethylamin, Dimethylethanolamin, Mono-, Di- und Triethanolamin, Dimethylaminopropanol, und gegebenenfalls Alkalihydroxide.

Neben Dianhydromannit, Dianhydrosorbit, Dianhydromannit- bzw. Dianhydrosorbithalbestern können selbstverständlich andere Reaktivverdünner, wie z. B. wasserlösliche Glykole, Etherglykole und/oder Glycerin eingesetzt werden. Die Mengen betragen in der Regel nicht mehr als 10 Gew.-%, bezogen auf die Summe der Komponenten A, B und D.

Aus den erfindungsgemäß hergestellten Polyestern und den erfindungsgemäßen Mischungen lassen sich hervorragende Einbrennlacke herstellen. Diese können die üblichen Pigmente und Lackhilfsmittel enthalten: Pigmente, wie z. B. Titandioxid, Eisenoxide, Chromoxide, Zinksulfid, Ruß, Aluminiumbronze; Füllstoffe, wie Kieselsäure und Sulfate.

Das Auftragen der Lacke kann z. B. durch Spritzen, Tauchen, Gießen, Streichen oder nach dem »Coil-coat«-Verfahren erfolgen. Die Härtung kann bei 80—230° C erfolgen.

Die in den nachfolgenden Beispielen genannten Teile sind Gewichtsteile; Prozentangaben beziehen sich auf das Gewicht.

## Beispiele

### Beispiel 1

551 Teile Propandiol-1,2, 369,5 Teile Trimethylolpropan, 747,3 Teile Adipinsäure und 506,2 Teile Phthalsäureanhydrid werden unter Inertgasatmosphäre bei 230° C bis zu einer Viskosität entsprechend einer Auslaufzeit von 150 Sek. (gemessen nach DIN 53 211, 60%ig in Dimethylformamid) kondensiert. Die Säurezahl nimmt dabei bis auf 10 ab. Die berechnete Hydroxyzahl betrug 165. Das erhaltene Produkt wird nachfolgend »Polyester A« genannt.

192,8 Teile Polyester A werden mit 75,5 Teilen des aus äquimolaren Mengen Dianhydrosorbit und Tetrahydrophthalsäureanhydrid bei 140° C hergestellten Halbesters bei 130° C unter Inertgasatmosphäre 20 Stunden lang gerührt. In dieser Zeit vermindert sich die Viskosität entsprechend einer Auslaufzeit von 120 Sek. (gemessen nach DIN 53 211, 60%ig in Dimethylformamid) auf 40 Sek. Das Reaktionsprodukt weist eine Gesamtsäurezahl von 60 auf. Aus dem so erhaltenen Bindemittel wurde nach folgender Rezeptur ein Decklack hergestellt:

| | |
|---|---|
| 25 Teile | Bindemittel, |
| 2,35 Teile | Dimethylethanolamin, |
| 10,41 Teile | methyliertes Methylolmelaminharz, 80%ig in Isopropanol, |
| 26,67 Teile | Titandioxid, |
| 0,20 Teile | Netzmittel auf Basis Fluoralkan, 50%ig in Wasser, und |
| 35,19 Teile | Wasser. |

Nach Zugabe von weiteren 12,6 Teilen Wasser entsprach die Viskosität des spritzfähigen Lakkes einer Auslaufzeit von 50 Sek. (gemessen nach DIN 53 211). Dieser Lack wies einen pH-Wert von 8,1 und einen Festkörpergehalt von 53,3% auf.

Mit diesem Lack hergestellte Beschichtungen zeigen gute lacktechnische Eigenschaften und zeichnen sich durch gute Ergebnisse in Glanz, Härte und Weißton sowie eine hohe Kreidungsresistenz aus.

### Beispiel 2

456,8 Teile Propandiol-1,2, 875,7 Teile Hexandiol-1,6, 685,6 Teile Trimethylolpropan, 845,1 Teile Adipinsäure, 697,6 Teile Azelainsäure und 939,2 Teile Phthalsäureanhydrid wurden in Inertgasatmosphäre polykondensiert, bis die Säurezahl 1,5 betrug und die Viskosität einer Auslaufzeit von 134 Sek. (gemessen nach DIN 53 211, 60%ig in Dimethylformamid) entsprach. In einer weiteren Reaktionsstufe wurde der erhaltene Polyester mit 650,6 Teilen Tetrahydrophthalsäureanhydrid bei 130° C umgesetzt, bis die Gesamtsäurezahl 65 betrug und die Viskosität einer Auslaufzeit von 218 Sek. (DIN 53 211, 60%ig in Dimethylformamid) entsprach. Das Reaktionsprodukt wurde bei 70° C mit Dianhydrosorbit im Gewichtsverhältnis 2 : 1 gemischt, 90% der freien Carboxylgruppen durch Dimethylethanolamin neutralisiert und das Harz mit Wasser verdünnt.

Aus diesem Konzentrat (40% Polyester, 20% Dianhydrosorbit, 40% Wasser) wurde nach folgender Rezeptur ein Lack hergestellt:

| | |
|---|---|
| 42,09 Teile | Konzentrat, |
| 10,41 Teile | methyliertes Methylolmelaminharz, 80%ig in Isopropanol, |
| 26,67 Teile | Titandioxid, |
| 0,20 Teile | Netzmittel auf Basis Fluoralkan, 50%ig in Wasser, und |
| 20,63 Teile | Wasser. |

Der erhaltene Lack hatte einen pH-Wert von 8,3, einen Festkörpergehalt von 60% und eine Viskosität entsprechend einer Auslaufzeit von 14 Sek. (DIN 53 211).

### Beispiel 3

648,6 Teile Propandiol-1,2, 675,1 Teile Trimethylolpropan, 1365,8 Teile Adipinsäure, 924,9 Teile Phthalsäureanhydrid und 685,5 Teile Dianhydrosorbit wurden bei einer Temperatur von 200° C bis zu einer Säurezahl von 14,1 polykondensiert. Die Viskosität erreichte dabei einen Wert entsprechend einer Auslaufzeit von 138 Sek. (DIN 53 211, 60%ig in Dimethylformamid). In einer zweiten Stufe wurde durch Halbesterbildung mit Tetrahydrophthalsäureanhydrid bis auf eine Gesamtsäurezahl von 77,9 aufgesäuert. Die Viskosität des erhaltenen Reaktionsproduktes entsprach einer Auslaufzeit von 346 Sek. (DIN 53 211, 60%ig in Dimethylformamid). Die freien Carboxylgruppen wurden durch die äquivalente Menge Dimethylethanolamin neutralisiert. Danach wurde das Harz mit Wasser auf einen Festgehalt von 86,6% verdünnt. Aus diesem Konzentrat wurde ein Spritzlack folgender Zusammen-

setzung hergestellt:

28,87 Teile Konzentrat,
10,41 Teile methyliertes Methylolmelaminharz, 80%ig in Isopropanol,
26,67 Teile Titandioxid,
0,20 Teile Netzmittel auf Basis Fluoralkan, 50%ig in Wasser, und
20,63 Teile Wasser.

Mit weiteren 5,6 Teilen Wasser wurde der Lack auf eine Spritzviskosität entsprechend einer Auslaufzeit von 51 Sek. (DIN 53 211) eingestellt. Der Festkörpergehalt betrug 56,8%.

Die damit hergestellten Decklacke zeichneten sich durch gute Glanzgebung, Elastizität, Weißton und Glanzhaltung aus.

**Patentansprüche**

1. Verfahren zur Herstellung von Polyestern mit einem mittleren Molekulargewicht von 1000 bis 10 000, einer Säurezahl von 1 bis 100 und einer Hydroxylzahl von 30 bis 400 aus üblichen Komponenten nach üblichen Verfahren, dadurch gekennzeichnet, daß man zusätzlich 5—50 Gew.-%, bezogen auf die Polyesterausgangskomponenten, Dianhydromannit, Dianhydrosorbit, Dianhydromannit- und/oder Dianhydrosorbithalbester einsetzt.

2. Verfahren nach Anspruch 1, dadurch gekennzeichnet, daß man 10—30 Gew.-%, bezogen auf Polyesterausgangskomponenten, Dianhydromannit, Dianhydrosorbit, Dianhydromannit- und/oder Dianhydrosorbithalbester einsetzt.

3. Verfahren nach Ansprüchen 1 und 2, dadurch gekennzeichnet, daß der Dianhydromannit- bzw. Dianhydrosorbithalbester aus der Reihe Dianhydromannit- bzw. Dianhydrosorbittetra- und -hexahydrophthalsäure-, -maleinsäure-, -bernsteinsäure-, -phthalsäure-, -trimellithsäure- und -pyromellithsäureester ausgewählt ist.

4. Mischungen aus

A) 10—90 Gew.-% Polyester mit einem mittleren Molekulargewicht $\overline{M}_n$ von 1000 bis 10 000,
B) 10—50 Gew.-% Reaktivverdünner,
C) bis zu 50 Gew.-% Wasser und
D) 0—50 Gew.-% Aminoplastharz,

wobei sich die Prozentangaben auf die Summe der Komponenten A, B und D beziehen, dadurch gekennzeichnet, daß der Reaktivverdünner B Dianhydromannit, Dianhydrosorbit, Dianhydromannit- und/oder Dianhydrosorbithalbester bzw. ein Salz dieser Verbindungen ist.

5. Mischungen nach Anspruch 5, dadurch gekennzeichnet, daß der Dianhydromannit- bzw. Dianhydrosorbithalbester aus der Reihe Dianhydromannit- bzw. Dianhydrosorbittetra- und -hexahydrophthasäure-, -maleinsäure-, -bernsteinsäure-, -phthalsäure-, -trimellithsäure- und -pyromellithsäureester ausgewählt ist.

6. Verwendung von Mischungen nach Ansprüchen 4 und 5 zur Herstellung wäßriger Einbrennlacke.

**Claims**

1. Process for the production of polyesters having an average molecular weight of 1,000 to 10,000, an acid number of 1 to 100 and a hydroxyl number of 30 to 400 from customary components by customary methode, characterised in that 5—50% by weight, based on the polyester starting components, of dianhydromannitol, dianhydrosorbitol, dianhydromannitol semi-esters and/or dianhydrosorbitol semi-esters are additionally used.

2. Process according to Claim 1, characterised in that 10—30% by weight, based on the polyester starting components, of dianhydromannitol, dianhydrosorbitol, dianhydromannitol semiesters and/or dianhydrosorbitol semi-esters are used.

3. Process according to Claims 1 and 2, characterised in that the dianhydromannitol semi-ester or dianhydrosorbitol semi-ester is selected from the series comprising dianhydromannitol- or dianhydrosorbitol tetra- and hexahydrophthalic acid ester, maleic acid ester, succinic acid ester, phthalic acid ester, trimellitic acid ester and pyromellitic acid ester.

4. Mixtures of

A) 10—90% by weight of polyesters having a average molecular weight $\overline{M}_n$ of 1,000 to 10,000,
B) 10—50% by weight of reactive diluent,
C) up to 50% by weight of water and
D) 0—50% by weight of aminoplast resin,

the percentages relating t othe sum of components A, B and D, characterised in that the reactive diluent B is dianhydromannitol, dianhydrosorbitol, dianhydromannitol semi-ester and/or dianhydrosorbitol semi-ester or a salt of these compounds.

5. Mixtures according to Claim 5, characterised in that the dianhydromannitol semi-ester or dianhydrosorbitol semi-ester is selected from the series comprising dianhydromannitol- or dianhydrosorbitol tetra- and hexahydrophthalic acid ester, maleic acid ester, succinic acid ester, phthalic acid ester, trimellitic acid ester and pyromellitic acid ester.

6. Use of mixtures according to Claims 4 and 5 for the production of aqueous stoving lacquers.

**Revendications**

1. Procédé pour la préparation de polyesters avec un poids moléculaire moyen de 1000 à 10 000, un indice d'acide de 1 à 100 et un indice d'hydroxyle de 30 à 400 à partir des constituants usuels selon des procédés conventionnels, caractérisé en ce qu'on utilise en outre 5 à 50% en poids, par rapport aux constituants de départ du polyester, de dianhydromannitol, de dianhydrosorbitol, de semi-esters de dianhydromannitol et/ou de dianhydrosorbitol.

2. Procédé selon la revendication 1, caractérisé en ce qu'on met en œuvre 10 à 30% en poids, par rapport aux constituants de départ du polyester, de dianhydromannitol, de dianhydrosorbitol, de semi-esters de dianhydromannitol et/ou de dianhydrosorbitol.

3. Procédé selon les revendications 1 et 2, caractérisé en ce que le semi-ester de dianhydromannitol ou de dianhydrosorbitol est choisi dans la série des tétra- et hexahydrophtalates, maléate, succinate, phtalate, trimellitate et pyromellitate de dianhydromannitol ou de dianhydrosorbitol.

4. Mélanges de

A) 10 à 90% en poids d'un polyester avec un poids moléculaire moyen $\overline{M}_n$ de 1000 à 10 000,
B) 10 à 50%en poids de diluant réactif,
C) jusqu'à 50% en poids d'eau, et
D) 0 à 50% en poids de résine aminoplaste,

les pourcentages se rapportant à la somme des constituants A, B et D, caractérisés en ce que le diluant réactif B est le dianhydromannitol, le dianhydrosorbitol, des semi-esters de dianhydromannitol et/ou de dianhydrosorbitol ou un sel de ces composés.

5. Mélanges selon la revendication 5, caractérisés en ce que le semi-ester de dianhydromannitol ou de dianhydrosorbitol est choisi dans la série des tétra- et hexahydrophtalates, maléate,m succinate, phtalate, trimellitate et pyromellitate de dianhydromannitol ou de dianhydrosorbitol.

6. Utilisation des mélanges selon les revendications 4 et 5 pour la préparation de peintures et vernis à cuire.